# EUROPÄISCHE PATENTANMELDUNG

(11) **EP 2 055 172 A2**
(43) Veröffentlichungstag der Anmeldung: **06.05.2009**
(21) Anmeldenummer: 08014079.1
(22) Anmeldetag: 06.08.2008
(51) Int. Cl.: A01D 34/76, A01D 69/06

(54) **Landmaschine**

(30) Priorität: 31.10.2007 DE 202007015176 U
(71) Anmelder: Alois Pöttinger Maschinenfabrik GmbH, 4710 Grieskirchen (AT)
(72) Erfinder: Lehner, Josef, Dipl.-Ing., 4710 Grieskirchen (AT); Greifeneder, August, 4707 Schlüsslberg (AT)
(74) Vertreter: Thoma, Michael

(57) **Zusammenfassung**

Die vorliegende Erfindung betrifft eine Landmaschine, insbesondere Mähmaschine, mit einem Maschinenrahmen (2), an dem ein Arbeitsaggregat (8) beweglich aufgehängt ist, einer Deichsel (4) zum Anbau an einen Schlepper, die mit dem Maschinenrahmen (2) um eine aufrechte Deichselschwenkachse (5) schwenkbar verbunden ist, sowie einem, mit einer Schlepperzapfwelle kuppelbaren, Antriebsstrang (13) zum Antreiben des Arbeitsaggregats (8), der ein Getriebe (15) mit einer liegenden Getriebeeingangswelle (16) und einer Getriebeausgangswelle (17) aufweist, wobei mit der Getriebeeingangswelle (16) eine sich in Richtung zum schlepperseitigen Deichselende hin erstreckende Antriebswelle (14) verbindbar ist. Erfindungsgemäß ist die Getriebeeingangswelle an einem Schwenkkopf (19) gelagert, der zusammen mit der Getriebeeingangswelle (16) um eine aufrechte Getriebeschwenkachse (20) unterhalb der Deichsel (4) im Bereich der Deichselschwenkachse (5) an dem Arbeitsaggregat (8) befestigt ist und mit einer an der Deichsel angelenkten Lenkstange (25) verbunden ist, mittels derer der genannte Schwenkkopf (19) nebst Getriebeeingangswelle bei Deichselschwenkbewegungen mitgeschwenkt wird.

## Beschreibung

Die vorliegende Erfindung betrifft eine Landmaschine, insbesondere Mähmaschine, mit einem Maschinenrahmen, an dem ein Arbeitsaggregat, insbesondere Mähwerk, beweglich aufgehängt ist, einer Deichsel zum Anbau an einen Schlepper, die mit dem Maschinenrahmen um eine aufrechte Deichselschwenkachse schwenkbar verbunden ist, sowie einem, vorzugsweise mit einer Schlepperzapfwelle kuppelbaren, Antriebsstrang zum Antreiben des Arbeitsaggregats, der ein Getriebe mit einer liegenden Getriebeeingangswelle und einer Getriebeausgangswelle aufweist, wobei mit der Getriebeeingangswelle eine sich in Richtung zum schlepperseitigen Deichselende hin erstreckende Antriebswelle verbindbar ist.

Bei deichselgezogenen Landmaschinen wie insbesondere Großmähwerken, bei denen die Deichsel gegenüber dem Maschinenrahmen verschwenkt wird, beispielsweise um das Arbeitsaggregat spurversetzt hinterherzuziehen, ist die Führung des Antriebsstranges zu dem Arbeitsaggregat nicht unproblematisch, da je nach Deichselschwenkwinkel unterschiedliche geometrische Verhältnisse vorliegen. Um entsprechenden Positionsversatz und Winkelversatz ausgleichen zu können, muss der Antriebsstrang entsprechend beweglich und gelenkig ausgebildet sein, was einerseits die Kosten des Antriebsstranges erhöht und den Wirkungsgrad aufgrund der zunehmenden Gelenkstellen verringert. Trotzdem treten durch den auftretenden Versatz Verschleiß und Abnutzung auf. Dabei werden häufig, um bei größeren Schwenkwinkeln eine ausreichende Gelenkigkeit des Antriebsstrangs sicherzustellen, mehrere Kardangelenke hintereinander geschaltet bzw. in Gelenkwellen integriert, um den Antriebsstrang bei den entsprechenden Schwenkbewegungen der Deichsel und des Antriebsaggregats entsprechend flexibel zu machen. Ein Gelenkpunkt im Antriebsstrang ist hierbei häufig im Bereich des Verteilergetriebes vorgesehen, das sozusagen die Schnittstelle zwischen der entlang der Deichsel geführten Zapf- bzw. Gelenkwelle einerseits und dem eigentlichen Arbeitsaggregat andererseits bildet. Dieses Verteilergetriebe wird eingangsseitig von der genannten Gelenkwelle vom Schlepper her angetrieben, während die Ausgangswelle des Verteilergetriebes ein oder mehrere Arbeitsaggregate antreibt.

Hierbei ist es bekannt geworden, dass Verteilergetriebe bzw. dessen Eingangswelle mit den Schwenkbewegungen der Deichsel gegenüber dem Maschinenrahmen mitzusteueren, d.h. um eine aufrechte Achse mit zu verschwenken. So zeigt die EP 0800757 B1 eine Mähmaschine, bei der die an der Deichsel entlang geführte Gelenkwelle auf ein Verteilergetriebe geführt ist, das an einem Arbeitsaggregat um eine aufrechte Schwenkachse schwenkbar angelenkt ist. Um die Knickwinkel des Gelenks zwischen Antriebswelle und Getriebeeingangswelle möglichst klein zu halten und den zwischen Deichsel und Verteilergetriebe auftretenden Versatz zu minimieren, wird das Getriebegehäuse bei Verschwenken der Deichsel gegenüber dem Maschinenrahmen ebenfalls verschwenkt. Hierzu ist ein Schwenkmechanismus in Form eines Bautenzuges oder eines Lenkergestänges vorgesehen, das an den Hydraulikzylinder angekoppelt ist, mittels dessen die Deichsel gegenüber dem Maschinenrahmen verschwenkt wird. Dabei muss jedoch ein flexibles Seil- bzw. Schlauchsystem oder ein mehrgliedriges Lenkersystem verwendet werden, um den zwischen Deichsel bzw. Deichselzylinder und Schwenkgetriebe auftretenden Axialversatz zu kompensieren. Ein ähnliches System ist aus der EP 0861582 B1 bekannt, gemäß der zur Verschwenkung des Verteilergetriebes ein Hydraulikzylinder vorgesehen ist, der hydraulisch mit dem Schwenkzylinder gekoppelt ist, mittels dessen die Deichsel verschwenkt werden kann.

Aus der EP 0885555 A2 ist eine Mähmaschine bekannt, bei der das Verteilergetriebe ebenfalls um eine aufrechte Achse schwenkbar auf dem Mähwerk sitzt. Um beim Verschwenken der Deichsel auftretenden Winkelversatz zwischen der Antriebswelle und der Eingangswelle des Verteilergetriebes zu minimieren, ist an dem Getriebegehäuse des Verteilergetriebes eine Lenkstange angelenkt, die anderenends an der Deichsel angelenkt ist. Hierbei kommt es jedoch bei Schwenkbewegungen der Deichsel einerseits zu beträchtlichem axialem Versatz zwischen dem Getriebegehäuse und dem Anlenkpunkt der Lenkstange an der Deichsel, was durch eine aufwändige, entsprechend großen Lenksversatz ausgleichende Ausbildung der Lenkstange kompensiert werden muss. Selbiges gilt auch für die Antriebswelle selbst, die einen entsprechend großen Teleskopierbereich besitzen muss. Andererseits kommt es darüber hinaus immer noch zu einem nicht unbeträchtlichen Winkelversatz zwischen der Antriebswelle und der Eingangswelle des Getriebegehäuses, der sich bei stärkerer Deichselauslenkung einerseits und Höhenversatz des Arbeitsaggregats gegenüber dem Maschinenrahmen andererseits aufsummieren kann, wodurch der Verschleiß erhöht sowie die Laufruhe vermindert wird. Um diesen Versatz zu eliminieren, ist in der EP 0297012 B1 vorgeschlagen, die Antriebswelle in das Innere der Deichsel hinein zu verlegen und das Verteilergetriebe in das Schwenkgelenk der Deichsel zu integrieren, so dass Schwenkbewegungen der Deichsel keinen Winkel- oder Axialversatz an Antriebswelle und Getriebeeingangswelle bewirken. Allerdings ist diese Lösung sehr aufwändig zu realiseren. Zudem ist die Zugänglichkeit von Antriebswelle und Verteilergetriebe zwecks Wartung und Reparatur stark beeinträchtigt. Ein vergleichbares System schlägt weiterhin die EP 0990383 B1 vor, bei der der Antriebsstrang ebenfalls von der Deichsel über den Maschinenrahmen zurück zum Arbeitsaggregat geführt ist. Hierbei sind jedoch eine Vielzahl von Getriebeelementen und Übersetzungsstufen notwendig, um die Antriebsbewegung auf das Mähwerk zu führen, was ebenfalls den Wirkungsgrad beeinträchtigt und überdies Verschleiß und Kosten aufgrund der Vielzahl der Antriebsstrangteile erhöht.

Hiervon ausgehend liegt der vorliegenden Erfindung die Aufgabe zugrunde, eine verbesserte Landmaschine der genannten Art zu schaffen, die Nachteile des Standes der Technik vermeidet und Letzteren in vorteilhafter Weise weiterbildet. Insbesondere sollen bei insgesamt einfacher und bezüglich des Drehmomentflusses direkter Ausbildung des Antriebsstrangs Ungleichförmigkeit an der Gelenkwelle und Geräuschbildung der Gelenke bei Deichselschwenkbewegungen vermieden und die Lebensdauer erhöht werden, ohne dies durch eine erschwerte Wartung und komplizierte Ausbildung des Antriebsstranges erkaufen zu müssen.

Erfindungsgemäß wird diese Aufgabe durch eine Landmaschine gemäß Anspruch 1 gelöst. Bevorzugte Ausgestaltungen der Erfindung sind Gegenstand der abhängigen Ansprüche.

Es wird also vorgeschlagen, das Verteilergetriebe am Arbeitsaggregat anzuordnen und den Antriebsstrang nicht über den Maschinenrahmen, sondern direkt von der Deichsel her zu dem Verteilergetriebe am Arbeitsaggregat zu führen, dabei jedoch den Maschinenrahmen und die Deichselanlenkung derart auszubilden bzw. das Verteilergetriebe derart zu platzieren, dass bei Schwenkbewegungen der Deichsel gegenüber dem Maschinenrahmen keine oder möglichst geringe Versatzbewegungen zwischen Deichsel und Verteilergetriebe auftreten. Obwohl das Verteilergetriebe nicht am Maschinenrahmen angeordnet ist und der Antriebsstrang nicht über den Maschinenrahmen geführt ist, ist das Verteilergetriebe doch im Bereich der Deichselschwenkachse angeordnet, so dass Deichselschwenkbewegungen keinen Versatz gegenüber dem Schwenkgetriebe mit sich bringen. Erfindungsgemäß ist die Getriebeeingangswelle an einem Schwenkkopf gelagert, der zusammen mit der Getriebeeingangswelle um eine aufrechte Getriebeschwenkachse unterhalb der Deichsel im Bereich der Deichselschwenkachse an dem Arbeitsaggregat befestigt ist und mit einer an der Deichsel angelenkten Lenkstange verbunden ist, mittels derer der genannte Schwenkkopf nebst Getriebeeingangswelle bei Deichselschwenkbewegungen mitgeschwenkt wird. Durch die Anordnung des Schwenkkopfes mit seiner Getriebeschwenkachse im Bereich der Deichselschwenkachse wird der Versatz bei Deichselschwenkbewegungen minimiert, was der Laufruhe und der Verschleißminimierung zugute kommt. Gleichzeitig ermöglicht die Anordnung des Verteilergetriebes unterhalb der Deichsel auf dem Arbeitsaggregat eine gute Zugänglichkeit sowohl für das Verteilergetriebe als auch für die zu diesem führende Antriebswelle, was sowohl der Montage als auch der Wartungsfreundlichkeit zugute kommt. Zum anderen wird hierdurch ein direkter Kraft- bzw. Drehmomentenfluss mit kurzen Wegen erreicht, was insgesamt der Effizienz des Antriebsstrangs förderlich ist. Darüber hinaus kann mit einer verblüffend einfachen Ausbildung des Antriebsstrangs mit nur wenigen Teilen und einer einfachen Lenkstange ein präzises Mitschwenken des Schwenkgetriebes erreicht werden.

Um Versatzbewegungen zwischen Verteilergetriebe und Deichsel und demzufolge in den Antriebsgelenken möglichst gänzlich zu vermeiden, kann in vorteilhafter Weiterbildung der Erfindung die Deichselschwenkachse im Wesentlichen fluchtend mit der Getriebeschwenkachse angeordnet werden. Bei beweglicher, vorzugsweise höhenveränderbarer und/oder kippbarer Aufhängung des Arbeitsaggregats an den Maschinenrahmen, was entsprechende Bewegungen des am Arbeitsaggregat befestigten Schwenkgetriebes gegenüber dem Maschinenrahmen und damit der Deichsel mit sich bringt, ist die Anordnung dabei vorteilhafterweise derart getroffen, dass in einer unausgelenkten Betriebsstellung des Arbeitsaggregats die Getriebeschwenkachse und die Deichselschwenkachse im Wesentlichen fluchtend zueinander ausgerichtet sind. Kommt es zu Bewegungen des Arbeitsaggregats gegenüber dem Maschinenrahmen, können mehr oder weniger geringfügige Abweichungen hiervon auftreten. Ggf. können auch schon in der unausgelenkten Betriebsstellung geringere Abweichungen in Kauf genommen werden, beispielsweise um bei größeren Auslenkungen des Arbeitsaggregats in eine bestimmte Richtung entsprechenden Versatz zu kompensieren.

Um eine gute Zugänglichkeit zum Verteilergetriebe sowie einen insgesamt kurzen Antriebsstrang zu erreichen und die Beweglichkeit des Arbeitsaggregats nicht durch zu wenig Luft zwischen Verteilergetriebe und Maschinenrahmen zu beeinträchtigen, kann in vorteilhafter Weise das Antriebsgetriebe an einem vorderen Abschnitt des Antriebsaggregats angeordnet und/oder zu einem Hauptabschnitt des Maschinenrahmens in Fahrtrichtung nach vorne versetzt angeordnet sein. Um dennoch die gewünschte Anordnung der Getriebeschwenkachse im Bereich der Deichselschwenkachse zu erreichen, kann die Deichselschwenkachse am Maschinenrahmen nach vorne verlagert sein bzw. gegenüber dem Hauptabschnitt des Maschinenrahmens, an dem das Arbeitsaggregat aufgehängt ist, nach vorne versetzt sein. Hierzu können an den Hauptabschnitt des Maschinenrahmens ein nach vorne vorspringender Deichselgelenksträger vorgesehen sein, an dem die Deichsel angelenkt ist. Vorzugsweise liegen sowohl die Deichselschwenkachse als auch die Getriebeschwenkachse in Fahrtrichtung vor dem Gesamtschwerpunkt des Maschinenrahmens. Vorteilhafterweise kann das Arbeitsaggregat über eine Lenkeranordnung an dem Maschinenrahmen anhebbar und absenkbar und/oder um eine quer verlaufende Nickachse kippbar angelenkt sein, wobei die Lenker der Lenkeranordnung vorteilhafterweise um liegende Querachsen an dem Maschinenrahmen und dem Arbeitsaggregt angelenkt sind und/oder vom Maschinenrahmen nach vorne zum Arbeitsaggregat vorspringen. Zur Gewichtsentlastung kann das Arbeitsaggregat über eine Federeinrichtung am Maschinenrahmen angelenkt sein, um sozusagen schwebend über Bodenwellen hinweg zu gleiten.

Um die Ausgleichsbewegungen des Arbeitsaggregats gegenüber dem Maschinenrahmen nicht zu behindern, ist das Verteilergetriebe ausreichend weit unterhalb der Deichsel angeordnet und von dieser beabstandet, wobei in der unausgelenkten Betriebsstellung des Arbeitsaggregats der Abstand des Verteilergetriebes von der Unterseite der Deichsel mindestens dem maximalen, nach oben gerichteten Verfahrweg des Arbeitsaggregats entspricht.

Die Lenkstange zum Mitschwenken des Verteilergetriebes bzw. dessen Schwenkkopfs um die aufrechte Getriebeschwenkachse kann grundsätzlich verschieden ausgebildet sein. Um Winkelversatz zwischen Antriebswelle und Getriebeeingangswelle auch bei Auslenkungen des Arbeitsaggregates gegenüber dem Maschinenrahmen möglichst gering zu halten, ist der Anlenkpunkt der Lenkstange an der Deichsel vorteilhafterweise im Bereich einer Anlenkung der Antriebswelle an die Deichsel angeordnet. Grundsätzlich könnte der Anlenkpunkt der Lenkstange an der Deichsel gegenüber dem Anlenkpunkt der Antriebswelle an die Deichsel auch verschoben werden, insbesondere näher zur Deichselschwenkachse hin gerückt sein. Die zuvor beschriebene Anordnung von Lenkstangenanlenkpunkt und Antriebswellenanlenkpunkt an der Deichsel in der Nähe zueinander ist jedoch eine besonders vorteilhafte Ausführung.

Bei starrer Befestigung des Arbeitsaggregats am Maschinenrahmen könnte die Lenkstange grundsätzlich starr ausgebildet und an festen Punkten am Verteilergetriebe und an der Deichsel angelenkt sein. Um jedoch die notwendigen Ausgleichsbewegungen zuzulassen, wenn sich das Arbeitsaggregat gegenüber dem Maschinenrahmen bewegt, ist in vorteilhafter Weiterbildung der Erfindung vorgesehen, dass die Lenkstange längenveränderbar, insbesondere teleskopierbar ausgebildet ist. Alternativ oder zusätzlich könnte der Anlenkpunkt der Lenkstange an der Deichsel und/oder an dem Schwenkkopf des Getriebes längsverschieblich, beispielsweise in einem Langloch geführt sein.

In vorteilhafter Weiterbildung der Erfindung ist die Lenkstange mit einem vorderen Ende an der Deichsel bzw. an dem deichselfesten Teil und einem hinteren Ende an dem genannten Schwenkkopf des Getriebes angelenkt, und zwar vorteilhafterweise jeweils schwenkbar um eine liegende Querachse. Bezüglich einer aufrechten Achse ist die Lenkstange jedoch an dem Schwenkkopf des Getriebes schwenkfest befestigt.

Insbesondere dann, wenn das Arbeitsaggregat gegenüber dem Maschinenrahmen auch Kippbewegungen um eine liegende Längsachse ausführen kann, beispielsweise um zum Längsbodenwellenausgleich mit einer rechten Seite nach unten und einer linken Seite nach oben bzw. umgekehrt fahren zu können, kann in vorteilhafter Weise vorgesehen sein, dass die genannten Lenkstange in sich verdrehbar ausgebildet ist. Alternativ oder zusätzlich kann die Lenkstange an der Deichsel und/oder dem Schwenkkopf des Getriebes um ihre Längsachse verdrehbar angelenkt sein. Hierdurch kann ein entsprechender Kippversatz des Getriebes, der bei den genannten Kippbewegungen des Arbeitsaggregats um eine liegende Längsachse auftritt, kompensiert bzw. ausgeglichen werden.

Um eine kleinbauende, kompakte Anordnung mit wenig Platzbedarf zu erreichen, ist in bevorzugter Weiterbildung der Erfindung das Getriebe in turmbauweise ausgebildet. Insbesondere können die Eingangswelle und die Ausgangswelle von einer beabstandet übereinander angeordnet sein, wobei vorteilhafterweise sowohl die Eingangswelle als auch die Getriebeausgangswelle eine liegende Ausrichtung haben können. In vorteilhafter Weiterbildung der Erfindung ist die Getriebeeingangswelle an einem oberen Ende des Getriebes und die Getriebeausgangswelle an einem unteren Ende des Getriebes angeordnet.

Je nach Weiterführung des Antriebsstrangs auf der Ausgangsseite des Verteilergetriebes kann die Getriebeausgangswelle unterschiedliche Ausrichtungen einnehmen. Gemäß einer vorteilhaften Ausführung der Erfindung kann die Getriebeausgangswelle sich in liegender Ausrichtung quer zur Fahrtrichtung des Arbeitsaggregat erstrecken, so dass bei insgesamt etwa mittiger Anordnung des Getriebes bezüglich der Arbeitsbreite des Arbeitsaggregats eine direkte Weiterführung des Antriebsstrangs zum seitlichen Rand des Arbeitsaggregats erleichtert wird.

In Weiterbildung der Erfindung ist die Getriebeausgangswelle ortsfest bzw. unverschwenkbar in einem Montagekopf gelagert, der fest an dem Arbeitsaggregat befestigt ist. Die Getriebeausgangswelle besitzt vorteilhafterweise eine feste Ausrichtung bezüglich dem Arbeitsaggregat.

Zur Kopplung der Getriebeeingangswelle mit der Getriebeausgangswelle können grundsätzlich verschiedene Getriebeelemente vorgesehen sein. Gemäß einer vorteilhaften Ausführung der Erfindung besitzt das Getriebe eine sich koaxial zur Getriebeschwenkachse erstreckende Zwischenwelle, die um ihre Längsachse drehbar, im Übrigen fest gelagert ist und sowohl mit der Getriebeeingangswelle als auch mit der Getriebeausgangswelle getrieblich verbunden ist. Hierzu kann die genannte Zwischenwelle mit der Getriebeeingangswelle bzw. mit der Getriebeausgangswelle jeweils über eine Zahnradstufe beispielweise in Form einer Kegelradstufe kämmen. Alternativ könnte ggf. auch eine Reibradstufe vorgesehen sein oder ein Kammeingriff nach Art einer Scheckenwelle vorgesehen sein. Bevorzugt ist jedoch ein Kammeingriff über eine Kegelradstufe, deren Kegelräder unmittelbar auf der Zwischenwelle bzw. der Getriebeeingangswelle und der Getriebeausgangswelle sitzen.

Um verschiedene Anforderungen an den Nachlauf zu erfüllen, kann die Deichsel grundsätzlich an verschiedenen Anlenkpunkten am Maschinenrahmen angelenkt sein. Gemäß einer vorteilhaften Ausführung der Erfindung kann eine Mittendeichsel vorgesehen sein, die etwa mittig am Maschinenrahmen an einem entsprechenden Anlenkpunkt angelenkt ist. Bei dieser Ausführung ist vorteilhafterweise das Getriebe ebenfalls mittig an dem Arbeitsaggregat platziert, wobei in der zuvor genannten Weise das Getriebe mit seiner Getriebeausgangswelle über eine Antriebswelle mit einem seitlich am Arbeitsaggregat vorgesehenen Aggregatsantrieb verbunden sein kann.

Alternativ oder zusätzlich zu einer solchen Mittendeichsel kann auch eine Seitendeichsel vorgesehen sein, die in Fahrtrichtung betrachtet seitlich im Randbereich rechts oder links an dem Maschinenrahmen an einem entsprechenden Anlenkpunkt befestigt ist. Je nach Anwendungsfall kann ein solcher seitlicher Anlenkpunkt beträchliche Vorteile mit sich bringen, beispielsweise um bei stark aus der Spur laufenden Mähwerken keine zu schräge Deichselstellung zu bedingen. Bei einer derartigen Seitendeichsel ist hinsichtlich des genannten Getriebes vorteilhafterweise vorgesehen, dass das Getriebe ebenfalls seitlich rechts oder links in einem Randbereich des Arbeitsaggregats angeordnet ist, insbesondere in der zuvor genannten Weise unterhalb der Deichsel im Bereich deren Deichselschwenkachse. Insbesondere kann hierbei in vorteilhafter Weise vorgesehen sein, dass das Getriebe auf eine seitlich am Arbeitsaggregat vorgesehene Antriebsstufe angeflanscht bzw. aufgeflanscht ist. Hierzu können an dem Montageteil des Getriebes und/oder an dem Eingangsbereich der genannten seitlichen Antriebsstufe flanschartige Verbindungsmittel vorgesehen sein, mittels derer das Getriebe direkt an der Antriebsstufe angeflanscht wird. Als Antriebsstufe können dabei verschiedene Getriebemittel zur weiteren Übertragung der Antriebsbewegung vorgesehen sein, beispielsweise ein Riemenantrieb oder eine andere Getriebestufe, über die die Antriebsbewegung auf die unten liegenden, üblicherweise rotierenden Messer übertragen wird.

In besonders vorteilhafter Weise kann hierbei vorgesehen sein, dass die Deichsel zwischen dem genannten etwa mittigen Anlenkpunkt und dem genannten seitlichen Anlenkpunkt versetzt werden kann. Hierzu kann der Maschinenrahmen entsprechende, mehrere Deichselanlenkpunkte aufweisen. Alternativ oder zusätzlich kann am Maschinenrahmen auch ein entsprechend versetzbarer Deichselanlenkpunkt vorgesehen werden. In Weiterbildung der Erfindung ist dabei entsprechend der Versetzbarkeit der Deichsel auch das vorgenannte Getriebe zwischen einer etwa mittigen Anbauposition und einer seitlichen Anbauposition am Arbeitsaggregat versetzbar. In vorteilhafter Weise ist dabei das Getriebe derart ausgebildet, dass es einerseits direkt auf die weitere Antriebsstufe aufgeflanscht werden kann und andererseits von der Antriebsstufe beabstandet am Arbeitsaggregat montierbar und über eine zwischengeschaltete Antriebswelle mit der Antriebsstufe verbindbar ist.

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische, schematische Gesamtansicht einer Landmaschine in Form einer Mähmaschine gemäß einer vorteilhaften Ausführung der Erfindung,
- Fig. 2:: eine Draufsicht auf die Mähmaschine aus Fig. 1, die die Fluchten der Anordnung der Deichselschwenkachse mit der Getriebeschwenkachse zeigt,
- Fig. 3:: eine Seitenansicht der Mähmaschine aus den vorhergehenden Figuren, die die Anordnung des Verteilergetriebes unterhalb der Deichsel im Bereich von deren Schwenkachse zeigt,

- Fig. 4:: eine ausschnittsweise, vergrößerte perspektivische Ansicht der Mähmaschine aus den vorhergehenden Figuren, die die Anordnung des Verteilergetriebes auf dem Mähwerk und dessen Steuerung über eine an der Deichsel angelenkte Lenkstange zeigt,
- Fig. 5:: eine schematische Schnittansicht des Verteilergetriebes der Mähmaschine aus den vorhergehenden Figuren, und
- Fig. 6:: eine perspektivische, schematische Gesamtansicht einer Landmaschine in Form einer Mähmaschine mit einer Seitendeichsel gemäß einer weiteren vorteilhaften Ausführung der Erfindung.

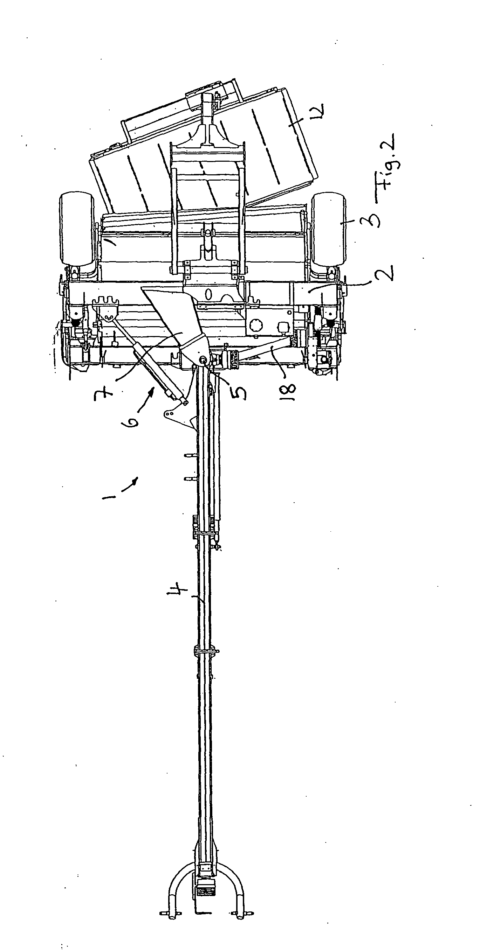

Die in den Figuren gezeichnete Mähmaschine 1 umfasst einen brückenartig ausgebildeten Maschinenrahmen 2, der mittels eines Fahrwerks 3 am Boden abgestützt ist. Der Maschinenrahmen 2 ist über eine Deichsel 4 an einen in den Figuren nicht gezeigten Schlepper anbaubar. Die genannte Deichsel 4 ist dabei an dem Maschinenrahmen 2 um eine aufrechte, etwa vertikale Deichselschwenkachse 5 schwenkbar angelenkt, wobei zwischen der Deichsel 4 und dem Maschinenrahmen 2 ein Schwenkverstellmechanismus vorgesehen ist, mittels dessen verschiedene Schwenkwinkel zwischen Maschinenrahmen 2 und Deichsel 4 eingestellt werden können, um das aus-der-Spur-Fahren der Mähmaschine 1 steuern zu können. In der gezeigten Ausführung umfasst der genannte Schwenkwinkelverstellmechanismus einen Schwenkantrieb 6 in Form eines Hydraulikzylinders, der von der Deichselschwenkachse 5 beabstandet an der Deichsel sowie dem Maschinenrahmen 2 angelenkt ist, vgl. Fig. 2.

Wie am besten Fig. 2 zeigt, ist die Deichselschwenkachse 5 dabei vom Hauptteil des Maschinenrahmens 2 nach vorne versetzt, und zwar mittels eines vom Maschinenrahmen 2 nach vorne auskragenden Schwenkachsenträgers 7, der vom oberen Querträger des Maschinenrahmens 2 im Wesentlichen liegend ausgerichtet nach vorne auskragt.

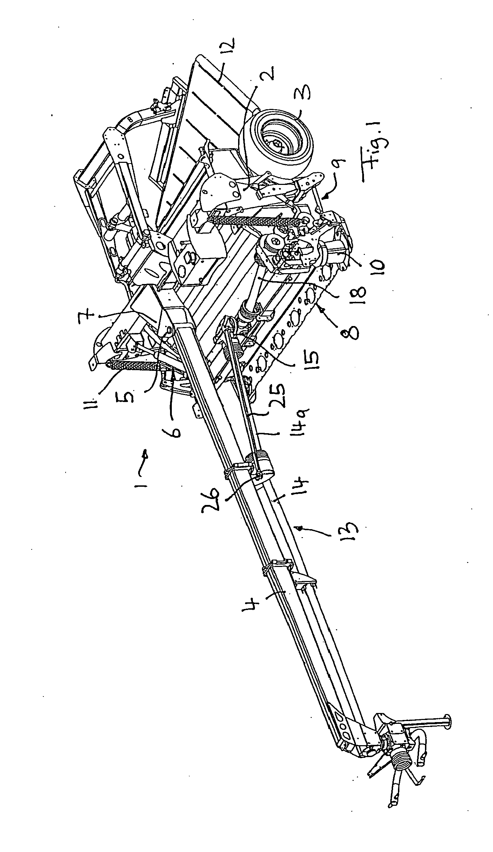

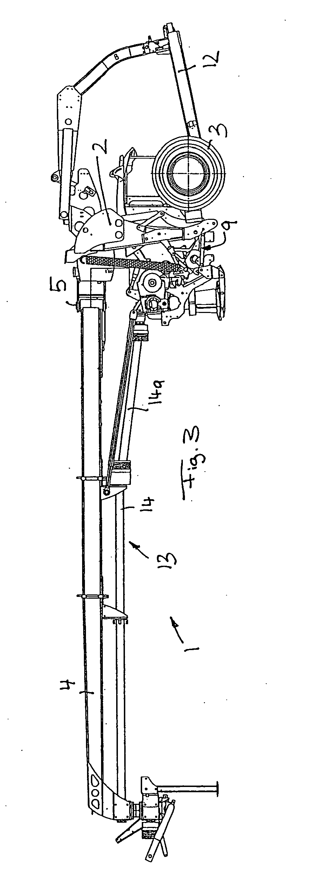

An dem Maschinenrahmen 2 ist ein Arbeitsaggregat in Form eines Mähwerks 8 aufgehängt, das sich unterhalb bzw. vor dem brückenartig ausgebildeten Maschinenrahmen 2 erstreckt. In der gezeichneten Ausführungsform ist das Mähwerk 8 dabei mittels einer Lenkeranordnung 9, die mehrere um jeweils liegende Querachsen am Maschinenrahmen 2 und am Arbeitsaggregat angelenkte Lenker umfasst, die vom Maschinenrahmen 2 nach vorne vorspringen, vgl. Figuren 1 und 3. Das Mähwerk 8 umfasst in an sich bekannter Weise in der gezeichneten Ausführungsform mehrere Schneidtrommeln 10 mit um aufrechten Achsen rotierenden Schneidmessern, wobei die genannten Schneidtrommeln 10 in Reihe nebeneinander quer zur Fahrtrichtung angeordnet sind, vgl. Fig. 1.

Zur Gewichtsentlastung des Mähwerks 8 ist diesem und/oder der genannten Lenkeranordnung 9 eine Vorspannvorrichtung zugeordnet, die in der gezeichneten Ausführungsform aus einer Federeinrichtung besteht, die am Maschinenrahmen 2 angelenkt ist, vgl. Fig. 1. Die Aufhängung des Mähwerks 8 am Maschinenrahmen 2 ist vorteilhafterweise derart ausgebildet, dass einerseits das Mähwerk 8 nach oben und unten verfahren kann. Anderseits kann vorgesehen sein, dass das Mähwerk 8 auch Kipp- und Nickbewegungen um eine liegende Achse in Fahrtrichtung und/oder um einer liegende Achse in Querrichtung ausführen kann, um sich optimal an Bodenwellen anpassen zu können.

Wie Fig. 3 am besten zeigt, erstreckt sich das Mähwerk 8 in Fahrtrichtung ein wenig vor dem Maschinenrahmen 2. Das Fahrwerk 3 läuft hinter dem Mähwerk 8 her.

Weiterhin ist an dem Maschinenrahmen 2 in der gezeichneten Ausführungsform ein Nachbearbeitungsgerät aufgehängt, das in der gezeichneten Ausführungsform aus einem Querförderband 12 besteht, jedoch auch einen Konditionierer umfassen kann.

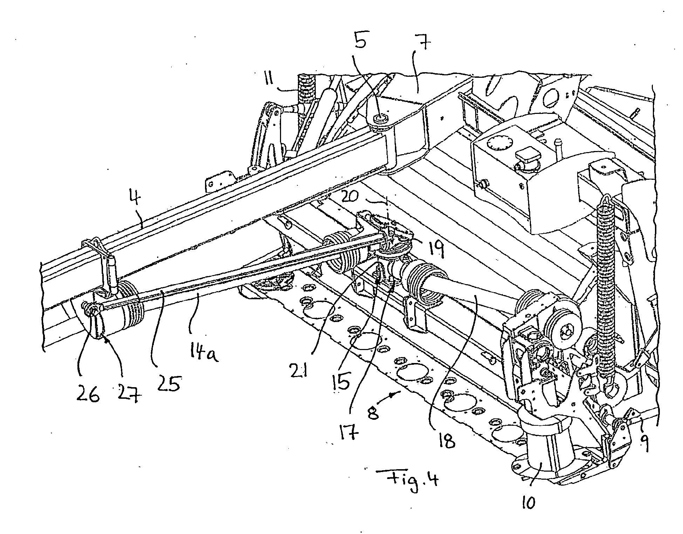

Zum Antreiben des Mähwerks 8 umfasst die Mähmaschine 1 einen Antriebsstrang 13, der eine vom schlepperseitigen Ende der Deichsel 4 her kommende Antriebswelle 14 umfasst, die in der gezeichneten Ausführungsform im Wesentlichen unterhalb der Deichsel 4 geführt und an dieser angelenkt ist, vgl. Figuren 1 und 3. Die genannte Antriebswelle 14 ist dabei vor dem Ende der Deichsel 4 von dieser weg leicht nach unten auf ein Verteilergetriebe 15 geführt, das an dem Mähwerk 8 befestigt ist. In der gezeichneten Ausführungsform ist dabei das Getriebe 15 im Wesentlichen auf der Oberseite des Mähwerks 8 an dessen vorderen Rand befestigt, so dass es sich im Wesentlichen unterhalb des Deichselanlenkpunktes des Schwenkachsenträgers 7 im Bereich der Deichselschwenkachse 5 erstreckt. Das Getriebe 15 umfasst eine Getriebeeingangswelle, die mit der unter der Deichsel 4 geführten Antriebswelle 14 verbunden ist. Eine Getriebeausgangswelle erstreckt sich quer zur Fahrtrichtung des Mähwerks 8 und ist mit einer ebenfalls quer in Fahrtrichtung verlaufenden Antriebswelle 18 verbunden, die ein seitlich am Mähwerk 8 angeordneten Antriebsgetriebe zum Antreiben der Schneidtrommeln 10 verbunden ist, vgl. Fig. 4.

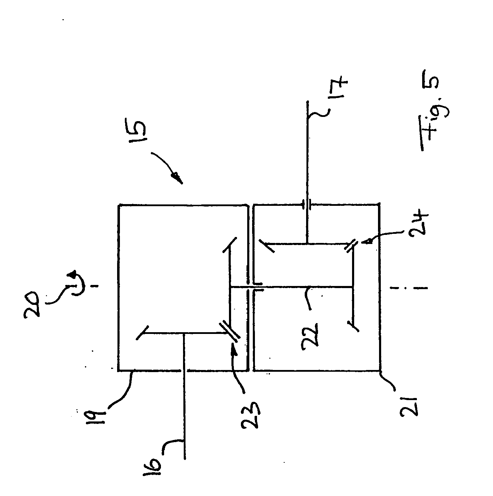

Wie am besten die Figuren 4 und 5 zeigen, ist das Getriebe 15 als Schwenkgetriebe ausgebildet. Es umfasst einen Schwenkkopf 19, an dem die zuvor genannte Getriebeeingangswelle 16 gelagert ist. Dieser Schwenkkopf 19, der in der gezeichneten Ausführung als Getriebegehäuseteil ausgebildet ist, ist schwenkbar um eine aufrechte, etwa vertikale Getriebeschwenkachse 20 an einem ebenfalls als Getriebegehäuseteil ausgebildeten Montagekopf 21 gelagert, so dass der genannte Schwenkkopf 19 zusammen mit der Getriebeeingangswelle 16 um die aufrechte Getriebeschwenkachse 20 relativ zum Mähwerk 8 verschwenkt werden kann. Der den Schwenkkopf 19 tragende Montagekopf 21 ist starr an dem Mähwerk 8 befestigt und lagert die Getriebeausgangswelle 17 drehbar, im Übrigen jedoch ortsfest.

Wie Fig. 5 verdeutlicht, sind die Getriebeeingangswelle 16 und die Getriebeausgangswelle 17 übereinander und voneinander beabstandet angeordnet, wobei die Getriebeeingangswelle 16 oberhalb angeordnet ist. Zur Kopplung der beiden Wellen 16 und 17 ist eine Zwischenwelle 22 vorgesehen, die sich koaxial zur Getriebeschwenkachse 20 erstreckt und ebenfalls in dem Montagekopf 21 gelagert ist. Die genannte Zwischenwelle 22 kämmt dabei einerseits über eine erste Kegelradstufe 23 mit der Getriebeeingangswelle 16 und andererseits über einer zweite Kegelradstufe 24 mit der Getriebeausgangswelle 17, vgl. Fig. 5, so dass eine Antriebsbewegung der Getriebeeingangswelle 16 in eine Drehbewegung der Getriebeausgangswelle 17 umgesetzt wird. Gleichzeitig ermöglicht die drehbare Befestigung des Schwenkkopfes 19 in Verbindung mit der Zwischenwelle 22 ein Verschwenken der Getriebeeingangswelle 16 um die aufrechte Getriebeschwenkachse 20.

Wie die Figuren 2 und 3 zeigen, ist das Getriebe 15 derart an dem Mähwerk 8 angeordnet, dass zumindest bei einer unausgelenkten Betriebsstellung des Mähwerks 8 sich die Getriebeschwenkachse 20 im Wesentlichen koaxial zu der Deichselschwenkachse 5 erstreckt. Hierdurch können Versatzbewegungen durch Deichselschwenkbewegungen weitgehend eliminiert werden.

Um auch einen Winkelversatz beim Verschwenken der Deichsel zu vermeiden, ist an dem Schwenkkopf 19 des Getriebes 15 eine Lenkstange 25 angelenkt, die an dem Schwenkkopf 19 um eine liegende Querachse schwenkbar, jedoch bezüglich einer aufrechten Achse schwenkfest und drehfest befestigt ist. Die Lenkstange 25 erstreckt sich - grob gesprochen - parallel zu dem Antriebswellenabschnitt 14a zu der Deichsel 4, an der die Lenkstange 25 schwenkbar angelenkt ist. Der Anlenkpunkt 26 der Lenkstange 25 an der Deichsel 4 liegt dabei im Bereich eines Anlenkpunktes 27 der Antriebswelle 14 an der Deichsel 4. Die genannte Antriebswelle 14 ist als Gelenkwelle ausgebildet und besitzt im Bereich des genannten Anlenkpunktes 21 sowie an der Verbindung mit der Getriebeeingangswelle 16 jeweils ein Gelenk. Wie Fig. 4 zeigt, ist die genannte Lenkstange 25 teleskopierbar ausgebildet, um bei Auf- und Abbewegungen des Mähwerks 8 gegenüber dem Maschinenrahmen 2 entsprechende Längenveränderungen ausgleichen zu können. Alternativ oder zusätzlich könnte auch eine Langlochbefestigung der Lenkstange 25 vorgesehen sein. Zudem ist die genannte Lenkstange 25 durch ihre teleskopartige Ausbildung in sich verdrehbar, um bei Querkippbewegungen des Mähwerks 8 einen Entsprechenden Winkelversatz ausgleichen zu können. Alternativ oder zusätzlich könnte die Lenkstange 25 auch an der Deichsel 4 kugelgelenkartig angelenkt sein.

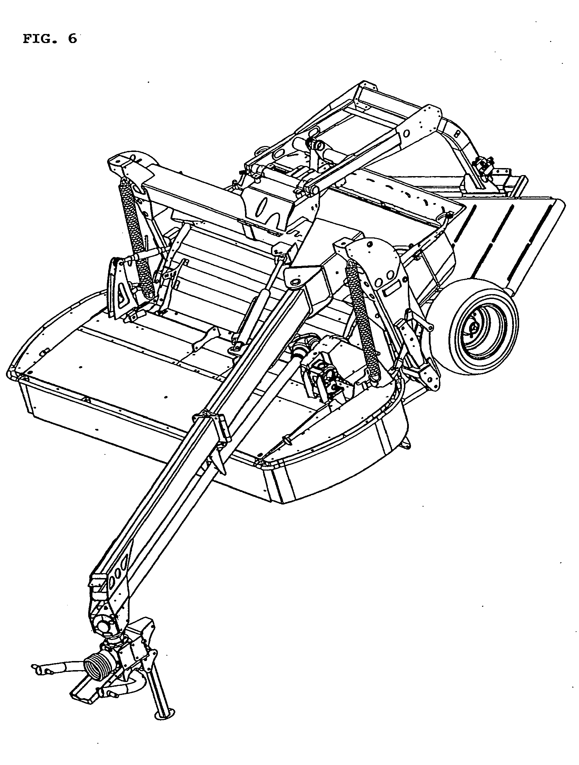

Wie Fig. 6 zeigt, kann in vorteilhafter Weise an der Mähmaschine 1, genauer gesagt an deren Maschinenrahmen 2, auch eine Seitendeichsel 4 angelenkt werden. Hierzu kann der Maschinenrahmen 2 zwei Schwenkachsenträger 7 und/oder einen versetzbaren Schwenkachsenträger 7 aufweisen, um die Deichsel 4 einmal etwa mittig und ein anderes Mal etwa seitlich in einem Randbereich des Maschinenrahmens anzulenken.

Wie Fig. 6 zeigt, ist im Falle einer Seitendeichsel 4 das Getriebe 15 ebenfalls seitlich in einem Randbereich des Mähwerks 8 platziert. Insbesondere ist hierbei das Getriebe 15 unmittelbar seitlich auf die weitere, dort vorgesehene Antriebsstrangstufe, die beispielsweise eine Riementriebstufe und/oder eine Kegelradstufe aufweisen kann, aufgeflanscht. Vorteilhafterweise ist die Positionierung des Getriebes 15 dabei ebenfalls unterhalb der Deichsel 4 etwa im Bereich der Deichselschwenkachse 5. Im Übrigen entspricht die Ausführung der Mähmaschine 1 gemäß Fig. 6 den zuvor beschriebenen Ausführungsformen, so dass insoweit auf deren Beschreibung verwiesen wird.

## Patentansprüche

1. Landmaschine, insbesondere Mähmaschine, mit einem Maschinenrahmen (2), an dem ein Arbeitsaggregat (8), insbesondere Mähwerk, beweglich aufgehängt ist, einer Deichsel (4) zum Anbau an einen Schlepper, die mit dem Maschinenrahmen (2) um eine aufrechte Deichselschwenkachse (5) schwenkbar verbunden ist sowie einem vorzugsweise mit einer Schlepperzapfwelle kuppelbaren Antriebsstrang (13) zum Antreiben des Arbeitsaggregats (8), der ein Getriebe (15) mit einer liegenden Getriebeeingangswelle (16) und einer Getriebeausgangswelle (17) aufweist, wobei mit der Getriebeeingangswelle (16) eine sich in Richtung zum schlepperseitigen Deichselende hin erstreckende Antriebswelle (14) verbindbar ist, **dadurch gekennzeichnet, dass** die Getriebeeingangswelle (16) in einem Schwenkkopf (19) gelagert ist, der zusammen mit der Getriebeeingangswelle (16) um eine aufrechte Getriebeschwenkachse (20) unterhalb der Deichsel (4) im Bereich der Deichselschwenkachse (5) an dem Arbeitsaggregat (8) befestigt ist und mit einer an der Deichsel (4) angelenkten Lenkstange (25) zum Mitschwenken des Schwenkkopfs (19) nebst Getriebeingangswelle (16) bei Deichselschwenkbewegungen verbunden ist.

2. Landmaschine nach dem vorhergehenden Anspruch, wobei die Getriebeschwenkachse (20) in etwa fluchtend mit der Deichselschwenkachse (5) ausgerichtet ist.

3. Landmaschine nach einem der vorhergehenden Ansprüche, wobei das Getriebe (15) in Fahrtrichtung betrachtet vor einem Hauptabschnitt des Maschinenrahmens (2) insbesondere an einem vorderen Ende des Arbeitsaggregats (8) angeordnet ist und an dem Maschinenrahmen (2) ein in Fahrtrichtung nach vorne auskragender Schwenkachsenträger (7) vorgesehen ist, an dem die Deichselschwenkachse (5) in Fahrtrichtung betrachtet vor dem Hauptabschnitt des Maschinenrahmens (2) befestigt ist.

4. Landmaschine nach einem der vorhergehenden Ansprüche, wobei die Lenkstange (25) längenveränderbar, vorzugsweise teleskopierbar, ausgebildet ist.

5. Landmaschine nach einem der vorhergehenden Ansprüche, wobei die Lenkstange (25) an der Deichsel (4) und/oder dem Schwenkkopf (19) des Getriebes (15) längsverschiebbar angelenkt ist.

6. Landmaschine nach einem der vorhergehenden Ansprüche, wobei die Lenkstange (25) an der Deichsel (4) und dem Schwenkkopf (19) des Getriebes (15) um jeweils eine liegende Querachse schwenkbar gelagert ist, wobei die Lenkstange an dem Schwenkkopf (19) bezüglich einer aufrechten Achse schwenkfest gelagert ist.

7. Landmaschine nach einem der vorhergehenden Ansprüche, wobei die Lenkstange (25) in sich verdrehbar ausgebildet ist und/oder an der Deichsel (4) und/oder dem Schwenkkopf (19) um die Lenkstangenlängsachse in sich verdrehbar ausgebildet ist.

8. Landmaschine nach einem der vorhergehenden Ansprüche, wobei die Getriebeeingangswelle (16) ortsfest und/oder unverschwenkbar in einem Montagekopf (21) gelagert ist, der fest an dem Arbeitsaggregat (8) befestigt ist.

9. Landmaschine nach einem der vorhergehenden Ansprüche, wobei sich die Getriebeausgangswelle (17) in liegender Ausrichtung quer zur Fahrtrichtung des Arbeitsaggregat (8) erstreckt, und wobei die Getriebeeingangswelle und die Getriebeausgangswelle voneinander beabstandet übereinander in jeweils liegender Ausrichtung angeordnet sind.

10. Landmaschine nach einem der vorhergehenden Ansprüche, wobei das Getriebe (15) zur Kopplung von Getriebeeingangswelle (16) und Getriebeausgangswelle (17) eine sich koaxial zur Getriebeschwenkachse (20) erstreckende Zwischenwelle (22) aufweist, die um ihre Längsachse drehbar, im Übrigen vorzugsweise fest gelagert ist.

11. Landmaschine nach einem der vorhergehenden Ansprüche, wobei das Arbeitsaggregat (8) an dem Maschinenrahmen (2) höhenveränderbar aufgehängt ist, wobei das Getriebe (15) unterhalb der Deichsel (4) einen Abstand zur Deichselunterseite aufweist, der mindestens dem maximalen Stellweg entspricht, der für das Arbeitsaggregat als Aufwärtsbewegung gegenüber dem Maschinenrahmen (2) vorgesehen ist.

12. Landmaschine nach einem der vorhergehenden Ansprüche, wobei das Arbeitsaggregat (8) an dem Maschinenrahmen (2) zumindest einachsig kippbar aufgehängt ist.

13. Landmaschine nach einem der vorhergehenden Ansprüche, wobei die Deichsel (4) etwa mittig am Maschinenrahmen (2) anlenkbar ist und das Getriebe (15) über einem mit der Getriebeausgangswelle (16) verbindbare Antriebswelle (18) mit einer in Fahrtrichtung betrachtet seitlich rechts oder links am Antriebsaggregat (8) vorgesehenen Antriebsstufe kuppelbar ist.

14. Landmaschine nach einem der vorhergehenden Ansprüche, wobei die Deichsel (4) in Fahrtrichtung betrachtet seitlich rechts oder links am Maschinenrahmen (2) anlenkbar ist und das Getriebe (15) ohne Zwischenschaltung weiterer Antriebswellen mit seiner Getriebeausgangswelle (16) an eine seitlich am Antriebsaggregat (8) vorgesehenen Antriebsstufe anflanschbar ist.

15. Landmaschine nach den beiden vorhergehenden Ansprüchen, wobei die Deichsel (4) wahlweise an einem mittigen Deichselanlenkpunkt und einem seitlichen Deichselanlenkpunkt befestigbar ist, wobei das Getriebe (15) von einem mittigen Anbaupunkt zu einem seitlichen Anbaupunkt und umgekehrt versetzbar ist.
